(19) **Europäisches Patentamt European Patent Office Office européen des brevets**

(11) **EP 4 750 073 A1**

(12) **EUROPÄISCHE PATENTANMELDUNG**

(43) Veröffentlichungstag:
27.05.2026  Patentblatt 2026/22

(21) Anmeldenummer: 25159861.1

(22) Anmeldetag: 25.02.2025

(51) Internationale Patentklassifikation (IPC):
$H04N\ 23/85^{(2023.01)}$   $G06T\ 15/00^{(2011.01)}$
$G06T\ 15/50^{(2011.01)}$   $H04N\ 1/60^{(2006.01)}$

(52) Gemeinsame Patentklassifikation (CPC):
**H04N 23/85; G06F 30/20; G06T 15/00;
H04N 1/6033;** G06F 2111/10; H04N 25/134

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **22.11.2024  DE 102024134483**

(71) Anmelder: **dSPACE SE & Co. KG**
**33102 Paderborn (DE)**

(72) Erfinder:
• **Tscherkassow, Ilja**
**33102 Paderborn (DE)**
• **Hante, Stefan**
**33102 Paderborn (DE)**
• **Arians, Merlin**
**33098 Paderborn (DE)**

(54) **SIMULATION EINES MOSAIKFILTERSENSORS DURCH TRANSFORMATION DES NATIVEN FARBRAUMS EINER VIRTUELLEN UMWELT IN EINE SENSORPIXELHELLIGKEIT**

(57) Verfahren zur Erzeugung synthetischer Bilddaten zur Imitation von Kamerarohdaten von einem Mosaikfiltersensor. Der Mosaikfiltersensor umfasst eine Anordnung von Sensorpixeln und außerdem einen Mosaikfilter, ausgestaltet als ein periodisches Mosaik von Farbfiltern unterschiedlicher Farbe, die derart angeordnet sind, dass jeder Sensorpixel aus der Anordnung von Sensorpixeln von genau einem Farbfilter überdeckt ist. Das Verfahren umfasst eine Positionierung und räumliche Ausrichtung einer virtuellen Kamera in einer dreidimensionalen virtuellen Umwelt auf einem Computersystem und eine Simulation einer Abbildung von farbigem Licht auf Sensorpixel eines in der virtuellen Kamera verbauten Mosaikfiltersensors durch eine Kameraoptik, wobei für das auf jeden Sensorpixel abgebildete Licht in Abhängigkeit von der Position und der räumlichen Ausrichtung der virtuellen Kamera eine Helligkeit und ein Farbwert aus einem nativen Farbraum der virtuellen Umwelt definiert ist. Das Verfahren umfasst weiter eine Erzeugung der synthetischen Bilddaten mittels einer Simulation des in der virtuellen Kamera verbauten Mosaikfiltersensors durch Herleitung von Pixelhelligkeiten der Sensorpixel in Abhängigkeit von der Helligkeit und dem Farbwert des auf den jeweiligen Sensorpixel abgebildeten Lichts. Für die Simulation des Mosaikfiltersensors wird für jede in dem Mosaikfilter vorkommende Filterfarbe eine der jeweiligen Filterfarbe zugeordnete Abbildungstabelle erstellt. In jeder Abbildungstabelle ist einer Vielzahl von Farbwerten aus einer Rasterabtastung des nativen Farbraums jeweils ein Pixelhelligkeitsmaß zugeordnet. Für die Sensorpixel des simulierten Mosaikfiltersensors wird die Filterfarbe des den jeweiligen Sensorpixel überdeckenden Farbfilters überprüft und die der jeweiligen Filterfarbe zugeordnete Abbildungstabelle konsultiert. Mittels Auslesung des dem jeweiligen Farbwert zugeordneten Pixelhelligkeitsmaßes wird die Pixelhelligkeit des jeweiligen Sensorpixels in Abhängigkeit von dem Farbwert des auf den Sensorpixel abgebildeten Lichts hergeleitet.

Fig. 2

**Beschreibung**

In der Entwicklung computerbasierter Steuersysteme ist es seit vielen Jahren bekannt und üblich, Steuersysteme in virtuellen Arbeitsumgebungen zu betreiben, um ihre Reaktion auf äußere Stimuli zu testen. Dafür werden Daten, die ein unter Test stehendes Steuersystem (der Prüfling) mittels Sensorik aufnimmt, von einem Simulatorcomputer synthetisch erzeugt und an geeigneten Schnittstellen in den Prüfling eingespeist. Die Komplexität der Simulation kann dabei, je nach Anforderung an die Testbedingungen, ein breites Spektrum bedienen, von einer einfachen Einspeisung bereits vorberechneter Daten bis hin zu einer komplexen virtuellen Umwelt, die sowohl eine detaillierte Simulation der elektromechanischen Arbeitsumgebung des Steuersystems als auch simulierte externe Akteure, die auf die simulierte Arbeitsumgebung einwirken, umfasst. Die Simulation kann weiterhin als geschlossene Regelschleife ausgestaltet sein, die von dem Steuersystem auf Basis der eingespeisten synthetischen Daten erzeugte Steuerdaten erfasst und berücksichtigt. Virtuelle Testumgebungen bieten gegenüber Feldtests in der physischen Welt mehrere Vorteile. Sie sind inhärent sicher, exakt reproduzierbar, und extreme Testszenarien, die in der realen Welt selten auftreten, sind auf einfache Weise erstellbar. Allerdings ist die Bereitstellung einer hinreichend realistischen virtuellen Testumgebung aufwendig, und zwar umso mehr, je mehr Sensordaten das unter Test stehende System verarbeitet und je sensibler es auf Änderungen der Sensordaten reagiert.

In der jüngeren Vergangenheit gab es große Fortschritte in der Entwicklung hochautomatisierter bis autonomer robotischer Systeme, die sich zumindest vorübergehend eigenständig und sicher in veränderlichen Umgebungen, z.B. im Straßenverkehr, in Menschenmengen, auf unbekanntem Untergrund, auf Ackerflächen oder in Gefechtsumgebungen, bewegen können. Solche autonomen Systeme verfügen notwendigerweise über zumindest einen bildgebenden Sensor, aus deren zugelieferten Sensordaten ein detailliertes Bild der nahen Umgebung herleitbar ist, das sowohl die Umgebungstopologie als auch Typ, Ort und Bewegungszustand von Objekten umfasst. Parallel zu dieser Entwicklung kamen, um derartige robotische Systeme wie zuvor geschildert in einer virtuellen Umwelt testen zu können, Sensorsimulationen auf den Markt, die synthetische Bilddaten von einem in der virtuellen Umwelt angeordneten virtuellen bildgebenden Sensor erzeugen können, um mit den Bilddaten ein Steuersystem zu stimulieren und dessen Reaktionen darauf mit einer Sollvorgabe abzugleichen.

Bildgebende Sensoren sind insbesondere Kameras, Radare oder Lidare. Kameras haben den Vorteil, dass sie als passive Sensoren relativ günstig sind und dabei ein detailreiches und hochaufgelöstes Bild liefern, aus dem sich viele Informationen extrahieren lassen. Bei den Kamera-Bildsensoren gibt es wiederum unterschiedliche Technologien. Besonders kostengünstig, und deshalb am weitesten verbreitet, sind Mosaikfiltersensoren. Bei dieser Technologie ist der eigentliche Bildsensor nicht farbsensitiv. Stattdessen ist im optischen Pfad der Kamera vor der Anordnung von Sensorpixeln auf dem Bildsensor ein Mosaikfilter vorgelagert. Der Mosaikfilter ist ein periodisches Mosaik von Farbfiltern, die derart angeordnet sind, dass jeder Sensorpixel von genau einem Farbfilter überdeckt ist. Der Mosaikfilter ist meistens ein Bayer-Filter, dessen Mosaik sich zu 50% aus grünen und zu je 25% aus roten und blauen Farbfiltern zusammensetzt, aber es existieren auch andere Typen von Mosaikfiltern. Ein mit einem Bayer-Filter überzogener Mosaikfiltersensor wird oft auch als Bayer-Sensor bezeichnet. Die unterschiedlichen Farbfilter führen zu starken Unterschieden in der Belichtung benachbarter Sensorpixel, und aus diesen Unterschieden wird in der Nachbearbeitung die Farbinformation des Bildes rekonstruiert.

Grundsätzlich müssen die von einer Sensorsimulation ausgegebenen synthetischen Bilddaten zu der Schnittstelle passen, an der sie in den Prüfling eingespeist werden, wobei als Faustregel gilt, dass die Simulation der Bilddaten umso einfacher ist, je höher der Verarbeitungsgrad der Bilddaten an der Schnittstelle ist. Eine Objektliste von Objekten in der Nähe des virtuellen Sensors, deren jeweiliger Typ und Bewegungszustand, ist einfach bereitzustellen, weil die virtuelle Umwelt diese Informationen typischerweise bereits nativ vorhält. Sind die synthetischen Bilddaten dahingegen für eine Einspeisung in die Bildvorverarbeitung eines Kamerasystems vorgesehen, dann müssen sie die von dem Bildsensor der jeweiligen Kamera erzeugten Rohdaten imitieren. Im Stand der Technik setzt das eine Simulation der Kameraoptik sowie der technisch-physikalischen Vorgänge innerhalb des Bildsensors voraus.

Eine derartige Kamerasimulation ist beispielsweise in der Druckschrift "Full Spectrum Camera Simulation for Reliable Virtual Developments and Validation of ADAS and Automated Driving Applications", René Molenaar et al., 2015 IEEE Intelligent Vehicles Symposium (IV), beschrieben. Ein weiteres Beispiel findet sich in der Druckschrift "Digital camera simulation" von Joyce Farrel, Peter B. Catrysse und Brean Wandell, Applied Optics Vol. 51 No. 4 (2012).

Vor allem die Simulation des Bildsensors ist kompliziert und im Ergebnis oftmals nicht zufriedenstellend. Für seine Simulation müssen zunächst wichtige Kennzahlen in Erfahrung gebracht werden. Das ist schon für sich genommen ein Nachteil, weil der Zulieferer des Sensors diese Zahlen möglicherweise unter Verschluss hält. Aber selbst, wenn es gelingt, anhand der Kennzahlen eine realitätsnahe technisch-physikalische Softwaresimulation des Bildsensors zu implementieren, weisen die von dieser Simulation erzeugten synthetischen Rohdaten oftmals keine zufriedenstellende Ähnlichkeit mit den Rohdaten auf, die der physische Bildsensor erzeugt, denn dieser ist für eine Belichtung mit physikalischem Licht in der realen Umwelt ausgelegt. Dynamische, dreidimensionale virtuelle Umwelten werden typischerweise mit Grafikengines modelliert, wie die Unreal Engine von Epic Games, die CryEngine von Crytek oder die Unity Engine von Unity Technologies. Diese modellieren farbiges Licht anhand eines der jeweiligen Engine nativen Farbraums auf eine Weise, die zwar eine für das menschliche Auge glaubhaft realitätsnahe Darstellung erzeugt, aber nicht der physikalischen Realität entspricht. Im Normalfall ist der native Farbraum einer virtuellen Umwelt ein RGB-Farbraum, basiert also auf einer additiven Mischung von diskreten roten, grünen und blauen Lichtanteilen.

Vor diesem Hintergrund ist es die Aufgabe der Erfindung, die Simulation eines Mosaikfiltersensors zur Erzeugung synthetischer Kamerarohdaten zu vereinfachen und zu verbessern.

Die Erfindung ist ein Verfahren zur Erzeugung synthetischer Bilddaten, die geeignet sind, von einem Mosaikfiltersensor, beispielsweise einem Bayer-Sensor, erzeugte Kamerarohdaten zu imitieren. Das bedeutet, dass die synthetischen Bilddaten geeignet sind, anstelle der von einem physischen Mosaikfiltersensor erzeugten Kamerarohdaten in einen zur Verarbeitung der Rohdaten ausgestalteten Prüfling eingespeist zu werden und anhand der Reaktion des Prüflings auf die synthetischen Rohdaten eine verwertbare Einschätzung herzuleiten, ob die Reaktion des Prüflings auf Rohdaten von dem physischen Mosaikfiltersensor einer gewünschten Reaktion entspricht.

Das Verfahren umfasst eine Positionierung und räumliche Ausrichtung einer virtuellen Kamera in einer dreidimensionalen virtuellen Umwelt auf einem Computersystem. Die virtuelle Umwelt ist vorzugsweise eine von einer Grafik-Engine dynamisch und in Echtzeit berechnete, insbesondere gerenderte, 3D-Umgebung. Die virtuelle Kamera ist vorzugsweise an einer virtuellen Repräsentation eines robotischen Systems aufgehängt, wobei insbesondere eine momentane Positionierung und/oder eine momentane räumliche Ausrichtung der Kamera von einem inneren Zustand und/oder einem Bewegungszustand und/oder einer Position des robotischen Systems in der virtuellen Umwelt vorgegeben ist. Beispielsweise kann die virtuelle Kamera an einem virtuellen autonomen Kraftfahrzeug angeordnet sein, das sich in einer von der virtuellen Umwelt simulierten Umgebung, zum Beispiel einer simulierten Straßenverkehrsumgebung, bewegt.

Das Verfahren umfasst eine Simulation einer Abbildung von farbigem Licht auf Sensorpixel eines in der virtuellen Kamera verbauten Mosaikfiltersensors durch eine Kameraoptik. Für das auf einen Sensorpixel abgebildete Licht ist dabei jeweils eine Helligkeit und ein Farbwert aus einem nativen Farbraum, beispielsweise einem sRGB-Farbraum, der virtuellen Umwelt definiert. Sowohl der Farbwert als auch die Helligkeit des Lichts hängen für jeden Pixel von den Lichtverhältnissen des räumlichen Bereichs der virtuellen Umwelt ab, den die simulierte Optik der virtuellen Kamera gerade auf den simulierten Mosaikfiltersensor abbildet, und sind auf diese Weise von der Position und der räumlichen Ausrichtung der virtuellen Kamera abhängig.

Das Verfahren umfasst weiterhin eine Erzeugung der synthetischen Bilddaten mittels einer Simulation des in der virtuellen Kamera verbauten Mosaikfiltersensors. Die Simulation des Mosaikfiltersensors umfasst eine Herleitung von Pixelhelligkeiten der Sensorpixel in Abhängigkeit von der Helligkeit und dem Farbwert des auf den jeweiligen Sensorpixel abgebildeten Lichts. Unter einer Pixelhelligkeit ist bevorzugt eine Messgröße zu verstehen, die von einem Sensorpixel in Abhängigkeit von einer Lichtmenge des innerhalb einer Belichtungszeit auf den Sensorpixel abgebildeten Lichts ausgegeben und von einer dem Sensorpixel nachgelagerten Bildverarbeitung als Helligkeit des Pixels interpretiert und dargestellt wird. Die Pixelhelligkeit kann besonders bevorzugt eine von dem Sensorpixel erzeugte simulierte elektrische Spannung und/oder einen von dem Sensorpixel erzeugter simulierter elektrischer Strom und/oder eine von dem Sensorpixel erzeugte simulierte elektrische Ladung repräsentieren, und die synthetischen Bilddaten werden aus der Gesamtheit der simulierten elektrischen Ladungen und/oder elektrischen Ströme und/oder elektrischen Ladungen erzeugt.

Zur Simulation des Mosaikfiltersensors ist gemäß Erfindung vorgesehen, für jede in dem Mosaikfilter vorkommende Filterfarbe eine der jeweiligen Filterfarbe zugeordnete Abbildungstabelle ("Look-Up Table") zu erstellen, sodass jeder Filterfarbe zumindest eine Abbildungstabelle und jeder Abbildungstabelle genau eine Filterfarbe zugeordnet ist. Beispielsweise umfasst ein Bayer-Filter, d.h. der Mosaikfilter eines Bayer-Sensors, die Filterfarben Blau, Grün und Rot. Für die Simulation eines Bayer-Sensors sieht die Erfindung dementsprechend eine Erstellung von zumindest drei Abbildungstabellen vor, von denen (ohne Beschränkung der Allgemeinheit) die erste eindeutig der Filterfarbe Blau zugeordnet ist, die zweite eindeutig der Filterfarbe Grün, und die dritte eindeutig der Filterfarbe Rot. Manche Bayer-Sensoren umfassen auch zwei unterschiedliche grüne Farbfilter, deren Transmissionsspektren sich geringfügig unterscheiden. Diese unterschiedlichen Grüntöne können als unterschiedliche Filterfarben interpretiert werden. In diesem Fall kann das erfindungsgemäße Verfahren auch eine Erstellung einer vierten Abbildungstabelle umfassen, um für beide in dem Mosaikfilter vorkommenden Grüntöne jeweils eine eigene Abbildungstabelle vorzuhalten.

Die Abbildungstabellen werden derart ausgestaltet, dass in jeder Abbildungstabelle einer Vielzahl von Farbwerten aus einer Rasterabtastung des nativen Farbraums der virtuellen Umwelt jeweils ein Pixelhelligkeitsmaß zugeordnet ist. Unter einem Pixelhelligkeitsmaß ist eine Größe zu verstehen, aus der eine Pixelhelligkeit eines Sensorpixels, der mit einem Farbfilter der zugeordneten Filterfarbe überdeckt ist und mit Licht des jeweiligen Farbwertes belichtet wird, herleitbar ist. Unter einer Herleitung einer Pixelhelligkeit kann in diesem Zusammenhang eine unmittelbare Auslesung der Pixelhelligkeit aus der jeweiligen Abbildungstabelle verstanden werden, aber auch eine Berechnung der Pixelhelligkeit unter Berücksichtigung des Pixelhelligkeitsmaßes. Für die Berechnung kann insbesondere auch eine Lichtmenge des auf den jeweiligen Sensorpixel abgebildeten Lichts berücksichtigt werden, besonders vorteilhaft eine Lichtintensität und eine Belichtungszeit.

Es ist natürlich nicht nötig, für jede Erzeugung synthetischer Bilddaten mittels einer erfindungsgemäßen Simulation eines Mosaikfiltersensors den Schritt der Erstellung der Abbildungstabellen zu wiederholen. Vorteilhaft werden zu einer gegebenen Mosaikfiltersensor-Baureihe passende Abbildungstabellen einmalig erstellt und anschließend abgespeichert, ggf. auch vielfach auf räumlich verteilten Speichermedien abgespeichert und verteilt, um sie bei nachfolgenden Simulationen des jeweiligen Mosaikfiltersensors aufzurufen und wiederzuverwenden.

Zur Erzeugung der synthetischen Bilddaten ist vorgesehen, für die Sensorpixel des simulierten Mosaikfiltersensors die Filterfarbe des den jeweiligen Sensorpixel überdeckenden Farbfilters zu überprüfen und nach der Überprüfung jeweils die der jeweiligen Filterfarbe zugeordnete Abbildungstabelle zu konsultieren. Aus der konsultierten Abbildungstabelle wird dann für eine Vielzahl von Sensorpixeln, insbesondere für alle Sensorpixel, des simulierten Mosaikfiltersensors der Farbwert des auf den jeweiligen Sensorpixel abgebildeten Lichts ermittelt und aus der für den jeweiligen Sensorpixel konsultierten Abbildungstabelle das dem jeweiligen Farbwert zugeordnete Pixelhelligkeitsmaß auszulesen, um aus dem Pixelhelligkeitsmaß eine Pixelhelligkeit des jeweiligen Pixels herzuleiten und aus der Gesamtheit der aus den Sensorpixeln hergeleiteten Pixelhelligkeiten die synthetischen Bilddaten zu erzeugen.

Abbildungstabellen zur Transformation von Farben sind im Stand der Technik aus einem Farbkorrekturverfahren namens Color Grading bekannt, das vor allem unter ästhetischen Gesichtspunkten in Filmen und Videospielen eingesetzt wird. Dabei werden mittels Abbildungstabellen Farbwerte aus einem Farbraum, der z.B. ein Farbraum einer computergenerierten virtuellen Umwelt sein kann, in andere Farbwerte desselben Farbraums transformiert, um die farbliche Stimmung einer dargestellten Szenerie abzuändern.

Die Abbildungstabellen des erfindungsgemäßen Verfahrens transferieren dahingegen den Farbraum einer virtuellen Umwelt in den "Farbraum" eines Mosaikfiltersensors. Diese Transformation ermöglicht eine rein empirische, aber realitätsnahe Simulation des Sensors unter Umgehung der technisch-physikalischen Vorgänge in dem Sensor, und erleichtert die Erzeugung realitätsnaher synthetischer Bilddaten auf diese Weise erheblich. Wegen des Wegfalls der physikalischen Simulation des Kamerasensors ist eine Kamerasimulation mittels der erfindungsgemäßen Abbildungstabellen außerdem sehr schnell und unter Inanspruchnahme relativ geringer Rechenressourcen durchführbar. Dadurch ist sie besonders geeignet für Kamerasimulationen in Realzeit (d.h. in harter Echtzeit in derselben Arbeitsgeschwindigkeit, die auch eine physische Kamera in einer realen Umwelt aufbieten würde), wie sie zur Stimulation physischer Prüflinge nötig sind ("Hardware in the Loop").

Das der Rasterabtastung des nativen Farbraums zugrunde liegende Raster ist vorteilhaft als ein regelmäßiges Gitter von Farbwerten in dem nativen Farbraum ausgestaltet. Der Abstand der Gitterpunkte kann einer Auflösungsgrenze des nativen Farbraums entsprechen. Wenn der Abstand der Gitterpunkte größer als die Auflösungsgrenze des nativen Farbraums ist, kann vorgesehen sein, bei der Auslesung des einem Farbwert zugeordneten Pixelhelligkeitsmaßes das Pixelhelligkeitsmaß aus einem dem Farbwert benachbarten Gitterpunkt auszulesen oder zur Auslesung des Pixelhelligkeitsmaßes zwischen den Pixelhelligkeitsmaßen, die zumindest zwei benachbarten Gitterpunkten zugeordnet sind, zu interpolieren.

Die Abbildungstabellen werden in einer Ausgestaltung der Erfindung anhand von Messungen erstellt. Die Durchführung der Messungen umfasst eine Erzeugung jeweils einer physischen Repräsentation einer Mehrzahl von Farbwerten des nativen Farbraums in Form einer mit einer Kamera erfassbaren elektromagnetischen Welle, und weiterhin eine Erfassung jeder physischen Repräsentation aus der Mehrzahl von physischen Repräsentationen mit einer physischen Kamera, in der ein Mosaikfiltersensor verbaut ist. Mit anderen Worten wird mit also für unterschiedliche Farbwerte Licht des jeweiligen Farbwerts (d.h. eines dem Farbwert entsprechenden elektromagnetischen Spektrums) erzeugt und zur Belichtung mindestens eines Sensorpixels des Mosaikfiltersensors verwendet. Dabei werden für jeden Farbwert die von jedem Farbkanal des Mosaikfiltersensors erzeugten Rohdaten ausgemessen. (Jeder Farbkanal entspricht einer auf dem Mosaikfilter vorkommenden Filterfarbe). Die Rohdaten entsprechen dabei insbesondere einer elektrischen Antwort der Sensorpixel, also infolge der Belichtung von den Sensorpixeln erzeugten elektrischen Spannungen, elektrischen Strömen oder elektrischen Ladungen.

Auf Basis der bei der Ausmessung ermittelten Messwerte lassen sich dann die Abbildungstabellen erstellen. Dafür ist es notwendig, die spektralen Farben der vermessenen elektromagnetischen Wellen in die entsprechenden Farben des nativen Farbraums der virtuellen Umwelt zu übertragen. Eine Anleitung dazu findet sich nachfolgend in der Beschreibung des Ausführungsbeispiels.

Die in den Abbildungstabellen hinterlegten Pixelhelligkeitsmaße repräsentieren in diesem Ausführungsbeispiel die tatsächlichen, gemessenen Sensorpixelantworten des in der physischen Kamera verbauten Mosaikfiltersensors. Die Abbildungstabellen sind dadurch ausgestaltet, im Zuge eines erfindungsgemäßen Verfahrens die elektrischen Sensorpixelantworten genau dieses Mosaikfiltersensors nachzubilden. Dadurch sind sie besonders geeignet zum Test eines Prüflings, der vorgesehen ist, Bilddaten von einer Kamera zu verwerten, die derselben Baureihe angehört wie die physische Kamera, in der der für die Messungen verwendete Mosaikfiltersensor war bzw. ist.

Zur Erzeugung der elektromagnetischen Wellen bestehen unterschiedliche Möglichkeiten, wobei die Erfassung der physischen Repräsentationen der unterschiedlichen Farbwerte grundsätzlich seriell oder parallel geschehen kann. Beispielsweise kann die elektromagnetische Welle jedes zu vermessenden Farbwerts seriell mit einer speziellen Lichtquelle erfolgen, die zur Ausstrahlung von Licht eines gewünschten, veränderbaren elektromagnetischen Spektrums im sichtbaren oder nahsichtbaren Bereich in hinreichend hoher Qualität ausgestaltet ist.

Vorzugsweise geschieht die Erzeugung der elektromagnetischen Wellen aber durch Ausleuchtung mindestens einer Farbkarte, wie sie beispielsweise zur Kalibrierung einer Kamera erwerbbar sind. Ein erfindungswesentliches Merkmal der Farbkarten ist, dass sie, entweder auf einer einzigen Farbkarte oder verteilt auf eine Mehrzahl von Farbkarten, auf einer Fläche eine Vielzahl von Farbwerten darstellen, wobei für jeden Farbwert ein für den Farbwert auf der Farbkarte charakteristisches Reflexionsspektrum wohldefiniert und bekannt ist. Die Farbkarte wird mit Licht eines wohldefinierten elektromagnetischen Spektrums bestrahlt und die derart bestrahlte Farbkarte mittels der physischen Kamera abgebildet, um die elektrischen Antworten der Sensorpixel auf die auf der Farbkarte dargestellten Farbwerte zu messen.

Vorteilhaft bilden die auf der mindestens einen Farbkarte dargestellten Farbwerte bereits eine Rasterabtastung des nativen Farbraums aus, sodass die in auf der mindestens einen Farbkarte dargestellten Farbwerte, in den nativen Farbraum der virtuellen Umwelt transformiert, ein den nativen Farbraum in seiner ganzen Spannweite abdeckendes Raster ausbilden. Besonders vorteilhaft ist die Anzahl der auf der Farbkarte dargestellten Farbwerte so hoch, dass die Gitterpunkte des Rasters hinreichend dicht liegen, dass die anhand der Farbkarte erstellten Abbildungstabellen unmittelbar zur Durchführung des erfindungsgemäßen Verfahrens nutzbar sind, ohne die Anzahl der in den Abbildungstabellen hinterlegten Pixelhelligkeitsmaße vorher zu vergrößern, beispielsweise durch Interpolation der Pixelhelligkeitsmaße.

Gängige käuflich erwerbbare Farbkarten erfüllen letztere Bedingung allerdings nicht. Deswegen kann das Verfahren eine Ergänzung der Messwerte oder der Pixelhelligkeitsmaße, die anhand der auf der Farbkarte abgebildeten Farben gewonnen wurden, durch ein Abschätzungsverfahren umfassen, insbesondere durch Interpolation oder Extrapolation der Messwerte bzw. der Pixelhelligkeitsmaße. Das gilt unabhängig davon, ob die auf der Farbkarte abgebildeten Farbwerte bereits eine Rasterabtastung des nativen Farbraums der virtuellen Umwelt ausbilden oder nicht. Die meisten Farbkarten bilden eine, zumindest aus dem Blickwinkel der Erfindung, eher geringe und willkürlich verteilte Anzahl von Farbwerten ab. In so einem Fall ist zur Erreichung einer gitterförmigen und hinreichend dichten Rasterabtastung eine nachträgliche Ergänzung der Messwerte vorteilhaft.

Es wurde zuvor bereits erwähnt, dass das elektromagnetische Spektrum des zur Ausleuchtung der Farbkarte verwendeten Lichts wohldefiniert und bekannt sein muss. Konkrete Strahlungsverteilungskurven (elektromagnetische Spektren) von Ausleuchtungen werden in der Fachwelt als Lichtarten bezeichnet, und einige spezifische Lichtarten sind als sogenannte Normlichtarten deklariert. Beispiele sind Normlichtart A (Glühlampe), D65 (Standard-Tageslicht), F1 bis F6 (Leuchtstoffröhre, unterschiedliche Typen) und LED-RGB1 (weißes LED-Licht).

Es ist offensichtlich, dass die von einer digitalen Kamera erzeugten Rohdaten von der Lichtart der Kameraumgebung abhängen, und für eine realitätsnahe Simulation der Kamera ist es sinnvoll, diese Abhängigkeit zu berücksichtigen. Dementsprechend ist es in einer vorteilhaften Ausgestaltung der Erfindung vorgesehen, eine durch die Strahlungsverteilungskurven der Ausleuchtung der Farbkarte definierte Lichtart zu erfassen und die mit dieser Ausleuchtung erstellten Abbildungstabellen der Lichtart zuzuordnen. Entsprechend kann die Erzeugung synthetischer Bilddaten zur Imitation von Kamerarohdaten von dem physischen Mosaikfiltersensor dann unter der Annahme geschehen, dass die physische Kamera, in der der physische Mosaikfiltersensor verbaut ist und dessen Bilddatenerzeugung simuliert werden soll, in einer Umwelt angeordnet ist, die entsprechend der Lichtart ausgeleuchtet ist. Bevorzugt ist die Lichtart ausgestaltet, eine in der physischen Welt vorkommende typische Lichtart nachzubilden, und kann insbesondere auch eine Normlichtart sein.

Viele virtuelle Umwelten halten nativ eine Vielzahl unterschiedlicher (Norm-)Lichtarten vor und sind ausgestaltet, das Rendering der virtuellen Umwelt dynamisch einer gerade ausgewählten Lichtart anzupassen. Bei Verwendung einer derartig ausgestalteten virtuellen Umwelt ist es besonders vorteilhaft, mehrere Sätze von Abbildungstabellen anzufertigen und vorzuhalten, die an unterschiedliche von der virtuellen Umwelt vorgehaltene Lichtarten angepasst sind. Die Abbildungstabellen können beispielsweise wie zuvor geschildert mit einer Farbkarte angefertigt werden, indem die beschriebene Abfolge von Verfahrensschritten zur Erstellung der Abbildungstabellen mehrfach durchlaufen wird, wobei bei jedem Durchlauf eine andere Lichtart für die Ausleuchtung der Farbkarte gewählt wird und die erstellten Abbildungstabellen in jedem Durchlauf der Lichtart zugeordnet werden, die im jeweils aktuellen Durchlauf für die Ausleuchtung gewählt ist. Zur Erzeugung der synthetischen Bilddaten sind dann flexibel die Abbildungstabellen auswählbar, die der von der virtuellen Umwelt dargestellten Lichtart zugeordnet sind. Während der Erzeugung der synthetischen Bilddaten können die Abbildungstabellen auch dynamisch, insbesondere situations- oder ortsabhängig, ausgetauscht und flexibel jeweils die Abbildungstabellen verwendet werden, die die virtuelle Umwelt aktuell für das Rendering der virtuellen Umwelt verwendet. Befindet sich zum Beispiel die virtuelle Kamera an einem virtuellen automatisierten Fahrzeug, das sich in der virtuellen Umwelt bewegt, dann können die Abbildungstabellen situationsabhängig flexibel ausgetauscht werden, beispielsweise je nachdem, welche Tageszeit und/oder welche Wetterverhältnisse in der virtuellen Umwelt dargestellt werden oder ob das virtuelle Fahrzeug sich gerade in einem abgeschatteten Bereich, im direkten Sonnenlicht oder in einer Unterführung mit künstlicher Beleuchtung befindet.

In einer alternativen Ausführungsform der Erfindung erfolgt die Erstellung der Abbildungstabellen durch eine Simulation anstelle einer Messung. Im Zuge dieser Simulation wird das Pixelhelligkeitsmaß für jeden Farbwert berechnet, wobei für die Berechnung der Pixelhelligkeitsmaße jeweils zumindest ein Transmissionsspektrum des jeweiligen Farbfilters, dem die zu berechnende Abbildungstabelle zugeordnet ist, und eine Quanteneffizienz eines Sensorpixels berücksichtigt werden. Vorteilhaft wird für die Berechnung der Pixelhelligkeitsmaße weiterhin eine Lichtart berücksichtigt. Die Lichtart, beispielsweise eine Normlichtart, ist charakterisiert und definiert durch Strahlungsverteilungskurven von Licht, das eine Umwelt der zu simulierenden physischen Kamera ausleuchten kann. Wie vorhergehend im Zusammenhang einer messungsbasierten Erstellung der Abbildungstabellen beschrieben, kann auch die auf diese Weise berechnete Abbildungstabelle der Lichtart zugeordnet werden, um wie beschrieben die Erzeugung synthetischer Bilddaten zur Imitation von Kamerarohdaten von dem physischen Mosaikfiltersensor unter der Annahme durchzuführen, dass die physische Kamera in einer Umwelt angeordnet ist, die entsprechend der Lichtart ausgeleuchtet ist.

In einer weiteren alternativen Ausführungsform der Erfindung geschieht die Erstellung der Abbildungstabellen anhand einer hybriden Vorgehensweise, die sowohl eine Messung wie vorhergehend beschrieben als auch eine Simulation, d.h. Berechnung, der Pixelhelligkeitsmaße wie vorhergehend beschrieben umfasst, wobei bei der Erstellung der Abbildungstabellen die Ergebnisse sowohl der Messung als auch der Simulation berücksichtigt werden.

Die Erfindung bezieht sich auch auf ein Computerprogrammprodukt, das Abbildungstabellen gemäß der vorhergehenden Beschreibung sowie Mittel zur Erzeugung synthetischer Bilddaten gemäß der vorhergehenden Beschreibung umfasst.

Die Zeichnungen und deren nachfolgende Beschreibung stellen eine beispielhafte Implementierung der Erfindung vor. Es zeigen

Figur 1    die Funktionsweise eines Mosaikfiltersensors;

Figur 2    einen Messaufbau und einen Ablauf zur Erstellung der Abbildungstabellen; und

Figur 3    ein Ablaufdiagramm der Erzeugung der synthetischen Bilddaten nach der Erstellung der Abbildungstabellen.

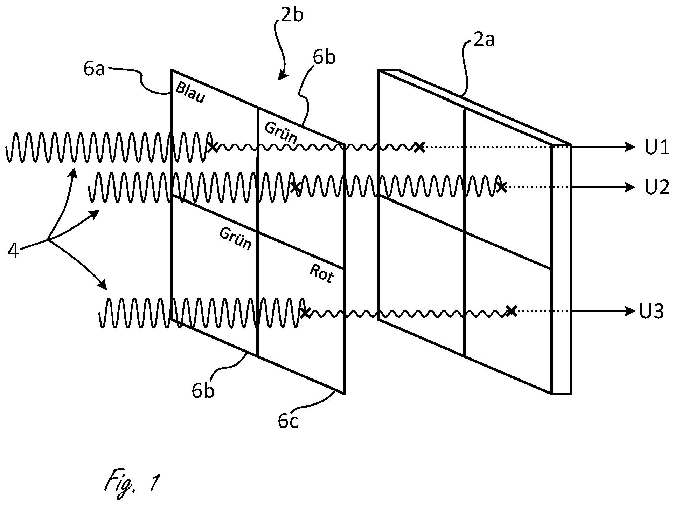

Die Abbildung der Figur 1 skizziert das Arbeitsprinzip eines Mosaikfiltersensors 2. Der Mosaikfiltersensor 2 umfasst eine matrixförmige Anordnung von Sensorpixeln 2a und einen Mosaikfilter 2b, ausgestaltet als ein periodisches, matrixförmiges Mosaik von Farbfiltern 6. Der Mosaikfilter 2b ist auf der optischen Achse der Kamera, in der der Mosaikfilter 2b verbaut ist, vor der Anordnung von Sensorpixeln 2a angeordnet und überdeckt die Anordnung von Sensorpixeln 2a. Die Farbfilter 6 sind derart angeordnet, dass jeder Sensorpixel aus der Anordnung von Sensorpixeln 2a von genau einem Farbfilter 6 überdeckt ist.

Zur besseren Darstellbarkeit ist aus der Anordnung von Sensorpixeln 2a nur ein kleiner Ausschnitt aus zwei mal zwei Sensorpixeln dargestellt, und dementsprechend von dem Mosaikfilter 2b nur ein Submosaik aus zwei mal zwei Farbfiltern 6. Ein realer Mosaikfiltersensor 2 umfasst typischerweise einige Millionen Sensorpixel und eine entsprechende Anzahl von Farbfiltern 6 auf dem Mosaikfilter 2b. Der Mosaikfilter 2b ist beispielhaft als Bayer-Filter dargestellt, d.h. das Submosaik besteht aus einem blauen Farbfilter 6a, zwei grünen Farbfiltern 6b und einem roten Farbfilter 6c. Dieses Submosaik ist auf dem Mosaikfilter 2b entlang beider Achsen vielfach nebeneinander angeordnet, sodass sich insgesamt ein periodisches, d.h. sich identisch wiederholendes, Mosaik von Farbfiltern 6 der Farben Grün, Rot und Blau ergibt.

Eine Kameraoptik 8 projiziert Umgebungslicht auf den Mosaikfilter 2b. Beispielhaft ist dargestellt, wie eine elektromagnetische Welle 4 im spektralen Grünbereich auf das dargestellte Submosaik des Mosaikfiltersensors 2b trifft. Die Farbfilter 6 des Mosaikfilters 2b lassen die Wellenlänge, bzw. den spektralen Verlauf, der Welle 4 unverändert, verringern aber in unterschiedlichem Maß, abhängig von den jeweiligen Transmissionsspektren der unterschiedlichen Farbfilter 6, die Amplitude der Welle 4. Während die Welle 4 den grünen Farbfilter 6b mit geringem Verlust passiert, verschlucken der blaue Farbfilter 6a und der rote Farbfilter 6c einen Großteil der Energie des ihn passierenden grünen Lichts, und die Amplitude der Welle 4 ist nach der Passage des blauen Farbfilter 6a und des roten Farbfilters 6c stark reduziert.

Das die einzelnen Farbfilter 6 passierende Licht wird von Mikrolinsen (nicht dargestellt) auf die Sensorpixel projiziert. Jeder einzelne Sensorpixel ist ein Fotodetektor, der Photonen in Elektronen umwandelt und auf diese Weise einen elektrischen Strom erzeugt, dessen Stromstärke proportional zur zeitlichen Photonendichte des auf den jeweiligen Sensorpixel projizierten Lichts ist. Jeder Sensorpixel umfasst einen elektrischen Kondensator (nicht dargestellt), der von dem elektrischen Strom geladen wird und innerhalb einer definierten Zeit, z.B. einer Belichtungszeit der Kamera, eine zu dem elektrischen Strom proportionale elektrische Spannung aufbaut. Die elektrischen Spannungen werden von einer Sensorik erfasst und an eine Bildvorverarbeitung 14 der Kamera weitergeleitet, die aus den Unterschieden der von benachbarten Sensorpixeln ausgelesenen Spannungen die Farbinformation des Bildes rekonstruiert.

In der Abbildung wird beispielhaft von dem blauen Farbfilter 6a eine Spannung U1 ausgelesen, von dem benachbarten grünen Farbfilter 6b eine Spannung U2 und von dem benachbarten roten Farbfilter 6c eine Spannung U3. Da die Welle 4 sich im spektralen Grünbereich befindet und nur der grüne Farbfilter für die Durchlässigkeit von grünem Licht optimiert ist, sind die Spannungen U1 und U3 wesentlich kleiner als die Spannung U2. Unter der plausiblen Annahme, dass das gesamte dargestellte Submosaik näherungsweise einheitlich ausgeleuchtet ist, kann die Bildvorverarbeitung 14 aus den gemessenen Spannungsunterschieden schließen, dass die das Submosaik belichtende Welle 4 grün ist, und in den Bildpixeln die entsprechende Farbinformation hinterlegen.

Die Gesamtheit der während eines einzelnen Belichtungsvorgangs ausgelesenen elektrischen Spannungen, also die Spannungen U1, U2, U3 und alle weiteren von den einzelnen Sensorpixeln ausgelesenen Spannungen, sind die Kamerarohdaten, aus denen die Kamera in weiteren Verarbeitungsschritten ein auf einem Anzeigegerät darstellbares Bild erzeugt, z.B. im Jpg-Format oder im Raw-Format, indem sie die Spannungen als Pixelhelligkeiten interpretiert. Die Kamerarohdaten sind in dem dargestellten Beispiel also eine Matrix aus elektrischen Spannungen, die in ihren Abmessungen der Matrix aus Sensorpixeln gleicht. Die Rohdaten müssen aber nicht zwingend elektrische Spannungen repräsentieren. Je nach Modell der Kamera können die Rohdaten beispielsweise auch elektrische Ströme oder elektrische Ladungen repräsentieren. Die Rohdaten müssen auch die elektrischen Spannungen bzw. die elektrischen Ströme bzw. die elektrischen Ladungen nicht unmittelbar repräsentieren, sondern können auch eine daraus hergeleitete Größe repräsentieren, insbesondere eine durch eine Skalierung hergeleitete Größe.

Es besteht also für jeden Sensorpixel eine lineare Abhängigkeit zwischen der Intensität bzw. der Lichtmenge (Photonenzahl) des während eines Belichtungsvorgangs auf einen Farbfilter projizierten Lichts und der elektrischen Spannung U1, U2, U3, ..., die im Zuge desselben Belichtungsvorgangs aus dem Sensorpixel, den der jeweilige Farbfilter 6 überdeckt, ausgelesen wird.

Das Verhältnis zwischen der Lichtmenge und der davon erzeugten Spannung ist im Wesentlichen von zwei Größen bestimmt: Dem wellenlängenabhängigen Transmissionsgrad des Farbfilters 6, dem sogenannten Transmissionsspektrum, und der ebenfalls wellenlängenabhängigen Quanteneffizienz des Sensorpixels. Der Transmissionsgrad ist der Lichtanteil, der den Farbfilter passiert, also das Verhältnis der Lichtintensitäten vor und hinter dem Farbfilter, und die Quanteneffizienz ist ein Grad für die Effizienz, mit der ein Sensorpixel Licht in elektrischen Strom umwandelt. Die in den Abbildungstabellen hinterlegten Pixelhelligkeitsmaße repräsentieren für jeweils eine wohldefinierte Farbe der Welle 4 die lineare Abhängigkeit der Spannung U1, U2, U3, ... von der Lichtintensität oder der Lichtmenge des auf den jeweiligen Sensorpixel abgebildeten Lichts.

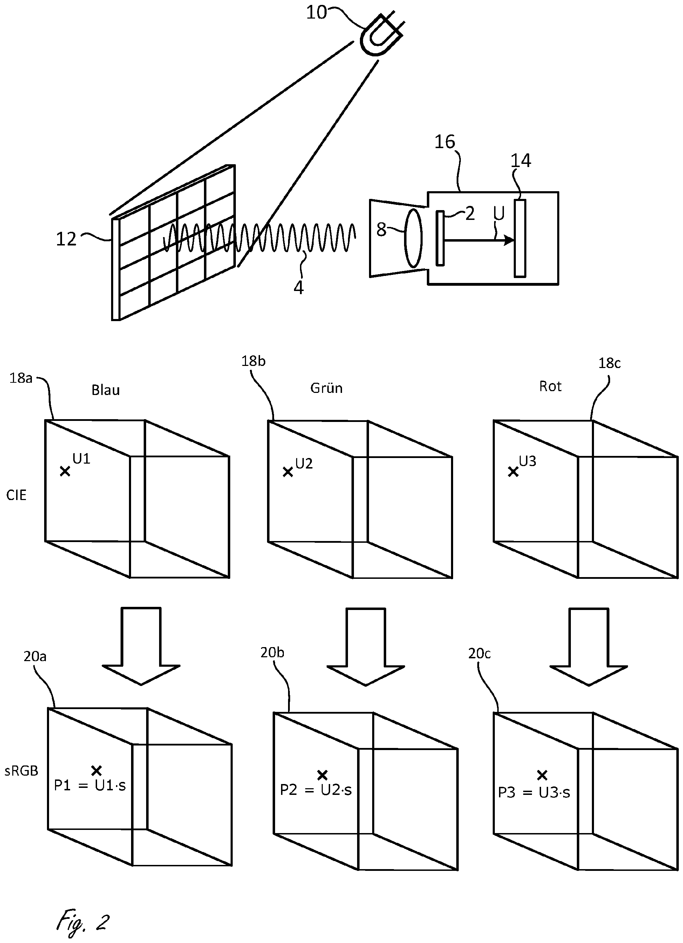

Die Abbildung der Figur 2 zeigt oben einen Aufbau zur Erstellung der Abbildungstabellen anhand einer Messung. Der Messaufbau umfasst eine Farbkarte 12 sowie eine Lichtquelle 10, die derart ausgestaltet und angeordnet ist, dass sie die Farbkarte 12 gleichmäßig und mit einer wohldefinierten Lichtart ausleuchtet. Die Farbkarte 12 ist für die Kalibrierung einer Kamera vorgesehen und ausgestaltet. Sie umfasst beispielhaft 16 unterschiedlich eingefärbte Farbfelder, von denen jedes einen wohldefinierten Farbwert mit einem wohldefinierten Reflexionsspektrum aufweist. Das bedeutet, dass von jedem einzelnen Farbfeld eine elektromagnetische Welle 4 mit einem wohldefinierten elektromagnetischen Spektrum ausgeht, die eine physische Repräsentation des Farbwertes des jeweiligen Farbfeldes darstellt. Die Kamera 16 ist für eine Abbildung der Farbkarte 12 angeordnet, sodass die Linse 8 die von jedem Farbfeld ausgehende magnetische Welle 4 auf eine Teilfläche des Mosaikfiltersensors 2 abbildet. Wie in der Beschreibung der Figur 1 beschrieben, erzeugt der Mosaikfiltersensor 2 die Rohdaten U als eine Matrix von Pixelhelligkeiten (hier: elektrischen Spannungen).

Als einleitender Schritt zur Erstellung der Abbildungstabellen 20 werden auf einem Computersystem sechs dreidimensionale Arrays 18, 20 allokiert. Drei der Arrays repräsentieren einen CIE-Farbraum. Die CIE-Farbräume sind eine Klasse von Tristimulus-Farbräumen, die dafür optimiert sind, die Farbwahrnehmung des menschlichen Auges, basierend auf der Anregung von drei Arten biologischer Fotorezeptoren (Zapfen), widerzuspiegeln. Drei weitere Arrays repräsentieren einen nativen Farbraum der virtuellen Umwelt, beispielhaft einen sRGB-Farbraum. Der sRGB-Farbraum gehört zu den RGB-Farbräumen, einer Klasse von Tristimulus-Farbräumen, die dafür optimiert sind, durch Ansteuerung von roten, grünen und blauen Leuchtelementen in den Bildpixeln einer Anzeigevorrichtung die Zapfen im menschlichen Auge derart zu stimulieren, dass für einen Betrachter eine gewünschte Farbwahrnehmung entsteht. Gängige Grafik-Engines zur Erzeugung einer virtuellen Umwelt rendern die virtuelle Umwelt typischerweise anhand eines RGB-Farbraums.

Allgemein ist unter einem nativen Farbraum der virtuellen Umwelt insbesondere ein Farbraum zu verstehen, anhand dessen die virtuelle Umwelt gerendert wird oder der dem Farbraum, anhand dessen die virtuelle Umwelt gerendert wird, zumindest hinreichend ähnlich ist. Vorteilhaft gehören beide Farbräume, der als "nativer Farbraum" ausgewählte Farbraum der Abbildungstabellen 20 und der zum Rendering der virtuellen Umwelt verwendete Farbraum, zumindest derselben Klasse von Farbräumen an. Beispielhaft ist es in einer Ausführung der Erfindung möglich, die Abbildungstabellen 20 für einen sRGB-Farbraum zu erstellen (also den sRGB-Farbraum als "nativen Farbraum" zu betrachten), obwohl die virtuelle Umwelt auf Basis eines spezialisierten RGB-Farbraums gerendert wird, der aber dem sRGB-Farbraum so ähnlich ist, dass die synthetischen Bilddaten trotzdem die Kamerarohdaten hinreichend gut imitieren.

In der Abbildung ist dargestellt, wie die schon der Figur 1 dargestellte elektromagnetische Welle 4 von einem Farbfeld der Farbkarte 12 ausgestrahlt wird und somit eine physische Repräsentation des in ebendiesem Farbfeld dargestellten Farbwerts ist. Zur Erstellung der Abbildungstabellen 20 werden die Rohdaten U ausgelesen. Wie zuvor bereits erläutert, sind die Rohdaten U eine Matrix aus elektrischen Spannungen, in der jeder Matrixeintrag einen einzigen, wohldefinierten Sensorpixel des Mosaikfiltersensors 2 repräsentiert. Es werden vier Sensorpixel ermittelt, die von einem Submosaik des Mosaikfilters 2b überdeckt sind und in einer Teilfläche des Mosaikfiltersensors 2 angeordnet sind, die von der Welle 4 belichtet wird. Aus den Matrixeinträgen der Rohdaten U, die die ermittelten Sensorpixel repräsentieren, werden die elektrischen Spannungen U1, U2 und U3 unmittelbar ausgelesen.

Ein erstes Array 18a, ein zweites Array 18b und ein drittes Array 18c repräsentieren jeweils den CIE-Farbraum. Das erste Array 18a, das zweite Array 18b und das dritte Array 18c repräsentieren keine unterschiedlichen CIE-Farbräume, sondern sie sind drei unabhängige Instanzen ein und desselben CIE-Farbraums. Dem Farbwert, d.h. dem elektromagnetischen Spektrum, der elektromagnetischen Welle 4 ist in dem CIE-Farbraum eine eindeutige CIE-Koordinate zugeordnet, die in der Abbildung durch ein Kreuz markiert ist. In dem ersten Array 18a wird an dieser Koordinate die elektrische Spannung U1 gespeichert. Das erste Array 18a ist dem blauen Farbfilter 6a des Mosaikfilters 2b zugeordnet. In dem zweiten Array 18b wird an dieser Koordinate die elektrische Spannung U2 gespeichert. Das zweite Array 18b ist dem grünen Farbfilter 6b des Mosaikfilters 2b zugeordnet. In dem dritten Array wird an dieser Koordinate die elektrische Spannung U3 gespeichert. Das dritte Array 18c ist dem roten Farbfilter 6c des Mosaikfilters 2b zugeordnet.

Die drei noch unbeschriebenen Arrays, die den sRGB-Farbraum (oder allgemeiner: den nativen Farbraum) repräsentieren, sind die Abbildungstabellen 20. Eine erste Abbildungstabelle 20a ist dem blauen Farbfilter 6a des Mosaikfiltersensors 2b zugeordnet. Der CIE-Koordinate aus dem CIE-Farbraum ist eine eindeutige sRGB-Koordinate im sRGB-Farbraum zugeordnet, die wiederum durch ein Kreuz markiert ist. Die zugeordnete sRGB-Koordinate repräsentiert den sRGB-Farbwert, der im menschlichen Auge eines standardisierten Betrachters denselben Farbeindruck erzeugt wie der zuvor ermittelte Farbwert der CIE-Koordinate bzw. wie die elektromagnetische Welle 4, und ist durch bekannte und allgemein zugängliche Transformationsformeln aus der CIE-Koordinate ermittelbar. In der ersten Abbildungstabelle 20a wird an der sRGB-Koordinate ein erstes Pixelhelligkeitsmaß P1 hinterlegt. Das erste Pixelhelligkeitsmaß ergibt sich durch eine Multiplikation der elektrischen Spannung U1 mit einem Skalierungsfaktor s, um die elektrische Spannung U1 auf eine Einheitshelligkeit der Welle 4 und eine Einheitsbelichtungszeit zu normieren.

Eine zweite Abbildungstabelle 20b ist dem grünen Farbfilter 6b des Mosaikfiltersensors 2b zugeordnet. In der zweiten Abbildungstabelle 20b wird an der sRGB-Koordinate ein zweites Pixelhelligkeitsmaß P2 hinterlegt. Das zweite Pixelhelligkeitsmaß P2 ergibt sich durch eine Multiplikation der elektrischen Spannung U2 mit dem Skalierungsfaktor s.

Eine dritte Abbildungstabelle 20c ist dem roten Farbfilter 6c des Mosaikfiltersensors 2b zugeordnet. In der dritten Abbildungstabelle 20c wird an der sRGB-Koordinate ein drittes Pixelhelligkeitsmaß P3 hinterlegt. Das dritte Pixelhelligkeitsmaß P3 ergibt sich durch eine Multiplikation der elektrischen Spannung U3 mit dem Skalierungsfaktor s.

Der beschriebene Vorgang wird analog für jeden auf der Farbkarte 12 dargestellten Farbwert wiederholt. Im Beispiel der dargestellten Farbkarte 12 wären danach, entsprechend den sechzehn abgebildeten Farbwerten, in jeder Abbildungstabelle 20 sechzehn Pixelhelligkeitsmaße an sechzehn unterschiedlichen sRGB-Koordinaten gespeichert.

Bei Bedarf, wenn die in den Abbildungstabellen 20 hinterlegten Pixelhelligkeitsmaße noch keine Rasterabtastung des sRGB-Farbraum darstellen oder die Abstände der Gitterpunkte des Rasters zu groß sind, können die in den Abbildungstabellen 20 hinterlegten Pixelhelligkeitsmaße durch ein mathematisches Abschätzungsverfahren, z.B. durch ein Interpolations- und/oder Extrapolationsverfahren, ergänzt werden. Da derartige Verfahren, insbesondere Extrapolationsverfahren, bestenfalls ungefähre Pixelhelligkeitsmaße generieren können, ist die Farbkarte 12 vorteilhaft derart ausgestaltet, dass die durch Messung in den Abbildungstabellen 20 hinterlegten Pixelhelligkeitsmaße bereits eine den nativen Farbraum annähernd vollständig überdeckende Abtastung, insbesondere Rasterabtastung, ausbilden. Ganz besonders vorteilhaft ist die Farbkarte derart ausgestaltet, dass die durch Messung in den Abbildungstabellen 20 hinterlegten Pixelhelligkeitsmaße den nativen Farbraum bereits derart dicht überdecken, insbesondere durch Ausbildung einer Rasterabtastung, dass keine Ergänzung der Pixelhelligkeitsmaße durch ein Interpolationsverfahren nötig ist.

Die fertiggestellten Abbildungstabellen 20 sind Funktionen $\mathbb{R}^3 \rightarrow \mathbb{R}$, die für jeden sRGB-Farbwert ein Pixelhelligkeitsmaß angeben, aus dem durch eine einfache Verrechnung mit einigen dynamischen Variablen, insbesondere Helligkeit bzw. Intensität der Welle 4 und Belichtungszeit, eine elektrische Antwort eines Sensorpixels ermittelbar ist, die der elektrischen Antwort des korrespondierenden Sensorpixels in der physischen Kamera 16 entspricht, wenn dieser mit Licht eines elektromagnetischen Spektrums belichtet wird, das für einen menschlichen Betrachter denselben Farbeindruck erzeugt wie der jeweilige sRGB-Farbwert.

Die drei Abbildungstabellen 20 beziehen sich auf die von der Lichtquelle 10 ausgestrahlte Lichtart. Andere Lichtarten erzeugen andere Spektren der von den Farbfeldern der Farbkarte 12 ausgestrahlten Wellen. Der vorhergehend im Zusammenhang der Figur 2 beschriebene Vorgang kann mehrfach mit unterschiedlichen Lichtquellen 10, die unterschiedliche Lichtarten ausstrahlen, wiederholt werden, um Abbildungstabellen 20 für unterschiedliche Lichtarten zu erstellen und vorzuhalten.

Da die für die Umwandlung von Licht in elektrische Spannungen verantwortlichen Vorgänge (Transmission durch die Farbfilter 6 und Fotodetektion durch die Sensorpixel) bekannt und quantifizierbar sind, können die Pixelhelligkeitsmaße in den Abbildungstabellen 20 alternativ auch durch eine Computersimulation der besagten Vorgänge berechnet werden.

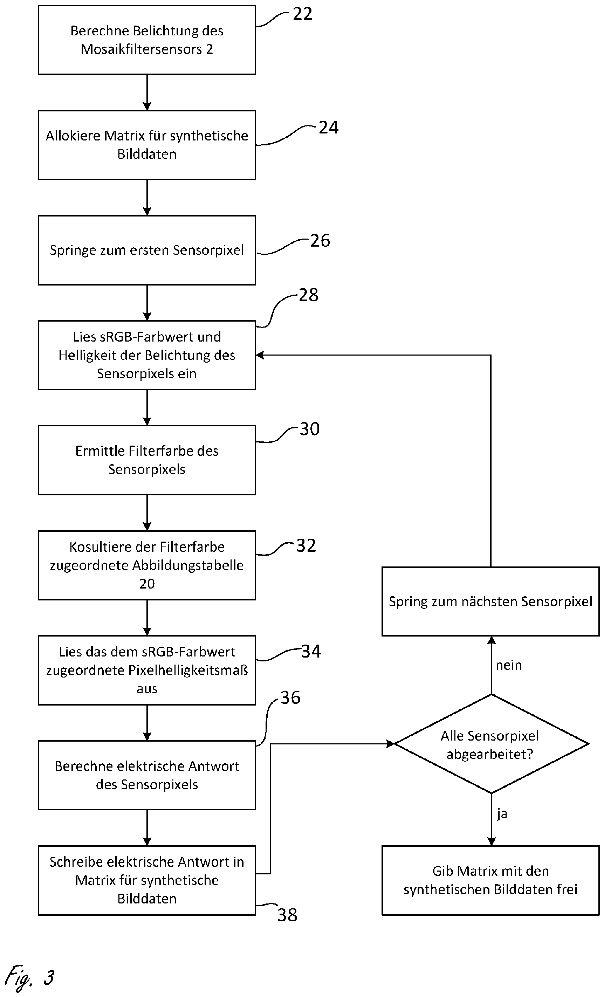

Wie die Abbildungstabellen 20 zur Simulation des Mosaikfiltersensors 2 verwendet werden, skizziert das Ablaufdiagramm der Figur 3.

In einem ersten Simulationsschritt 22 wird anhand einer Simulation der Kameraoptik 8 und auf Basis eines aktuellen Zustands der virtuellen Umwelt, umfassend eine aktuelle Positionierung und räumliche Ausrichtung der virtuellen Kamera sowie einer Anzahl weiterer statischer und dynamischer Grafikobjekte der virtuellen Umwelt, eine Belichtung des Mosaikfiltersensors 2 berechnet. Nach Abschluss der Berechnung der Belichtung ist für jeden Sensorpixel des virtuellen Mosaikfiltersensors 2 eine Belichtung des jeweiligen Sensorpixels berechnet, die einen sRGB-Farbwert und eine Helligkeit bzw. eine Lichtmenge einer den jeweiligen Sensorpixel belichtenden Welle 4 umfasst. Zur Hinterlegung der synthetischen Bilddaten wird in einem zweiten Simulationsschritt 24 eine Matrix allokiert, die für jeden Sensorpixel des virtuellen Mosaikfiltersensors einen Eintrag zur Speicherung der elektrischen Antwort des jeweiligen Sensorpixels umfasst.

Die elektrischen Antworten der einzelnen Sensorpixel des virtuellen Mosaikfiltersensors 2 werden nachfolgend seriell berechnet. In einem dritten Simulationsschritt 26 wird zum ersten Sensorpixel gesprungen, d.h. der erste Sensorpixel wird für die Berechnung der elektrischen Antwort angewählt. In einem vierten Simulationsschritt 28 werden der sRGB-Farbwert und die Helligkeit des den ersten Sensorpixel belichtenden Lichts eingelesen. Beide Werte, Helligkeit und sRGB-Farbwert, wurden bei der Berechnung der Gesamtberechnung im ersten Simulationsschritt 22 bereits berechnet und liegen im vierten Simulationsschritt zur Auslesung bereit.

In einem fünften Simulationsschritt 30 wird die Filterfarbe des Sensorpixel ermittelt. In der virtuellen Kamera ist jedem Sensorpixel des virtuellen Mosaikfiltersensors 2 eine Filterfarbe zugeordnet. Die einem Sensorpixel zugeordnete Filterfarbe entspricht der Filterfarbe eines Farbfilters im Mosaik des physischen Mosaikfilters 2b, der einen Sensorpixel eines physischen Mosaikfiltersensors 2 überdeckt.

In einem sechsten Simulationsschritt 32 wird die der im fünften Simulationsschritt 30 ermittelten Filterfarbe zugeordnete Abbildungstabelle 20 konsultiert, d.h. aufgerufen. In einem siebten Simulationsschritt 34 wird aus der im sechsten Simulationsschritt 32 konsultierten Abbildungstabelle 20 das Pixelhelligkeitsmaß ausgelesen, das dem im vierten Simulationsschritt 28 eingelesenen sRGB-Farbwert zugeordnet ist.

In einem achten Simulationsschritt 36 wird unter Berücksichtigung des im siebten Simulationsschritt 34 ausgelesenen Pixelhelligkeitsmaßes, der Belichtungszeit und der im vierten Simulationsschritt 28 eingelesenen Helligkeit die elektrische Antwort des Sensorpixels berechnet. In dem konkreten Beispiel wäre die elektrische Antwort beispielsweise eine elektrische Spannung. Unter der Annahme, die dem Sensorpixel zugeordnete Filterfarbe sei Blau und das ausgelesene Pixelhelligkeitsmaß sei P1 (siehe die Abbildung der Figur 2), kann die elektrische Antwort sich beispielsweise aus folgender Formel ergeben:

$$U1 = \frac{I}{I_U} \cdot \frac{E}{E_U} P1$$

mit I als Helligkeit, $I_U$ als Einheitshelligkeit, E als Belichtungszeit und $E_U$ als Einheitsbelichtungszeit. Die berechnete elektrische Antwort wird in einem neunten Simulationsschritt 38 in die im zweiten Simulationsschritt 24 allokierte Matrix geschrieben, in den Eintrag der Matrix, der für die Speicherung der elektrischen Antwort des Sensorpixels vorgesehen ist.

Die in der Matrix hinterlegten elektrischen Antworten sind die synthetischen Bilddaten. Nach Abschluss des neunten Simulationsschritts 38 erfolgt eine Prüfung, ob alle Sensorpixel abgearbeitet sind, d.h. ob für jeden Sensorpixel eine elektrische Antwort berechnet und in der Matrix hinterlegt wurde. Wenn das der Fall ist, wird die Matrix mit den synthetischen Bilddaten zur weiteren Verarbeitung freigegeben. Unter dieser Freigabe ist im Normalfall zu verstehen, dass die in der Matrix hinterlegten synthetischen Bilddaten logisch oder physisch zu einer nachgeschalteten Instanz transferiert werden, die die synthetischen Bilddaten einliest und weiterverarbeitet. Die nachgeschaltete Instanz kann insbesondere ein zur Verarbeitung der synthetischen Bilddaten ausgestalteter Prüfling sein.

Wenn die Prüfung negativ ist, also noch nicht alle Sensorpixel abgearbeitet sind, wird zum nächsten Sensorpixel gesprungen und nachfolgend zum vierten Verfahrensschritt 28 zurückgesprungen, um auf gleiche Weise für den nunmehr ausgewählten Sensorpixel eine elektrische Antwort zu berechnen und in der Matrix zu hinterlegen.

Insbesondere, wenn der Prüfling einen beständigen Strom von Bilddaten erwartet, kann der in der Figur 3 skizzierte Simulationsvorgang wiederholt durchlaufen werden, beispielsweise synchronisiert mit einer simulierten Abfolge von Belichtungsvorgängen in der virtuellen Kamera, wobei jeder Durchlauf der dargestellten Simulationsschritte einen Burst von synthetischen Bilddaten erzeugt, wobei der Strom von Bilddaten als eine beständige zeitliche Abfolge von Bursts ausgestaltet ist.

## Patentansprüche

1. Computerimplementiertes Verfahren zur Erzeugung synthetischer Bilddaten zur Imitation von Kamerarohdaten (U) von einem Mosaikfiltersensor (2), beispielsweise einem Bayer-Sensor, der Mosaikfiltersensor (2) umfassend eine Anordnung von Sensorpixeln (2a) und weiterhin umfassend einen Mosaikfilter (2b), beispielsweise einen Bayer-Filter, ausgestaltet als ein periodisches Mosaik von Farbfiltern (6) unterschiedlicher Farbe, die derart angeordnet sind, dass jeder Sensorpixel aus der Anordnung von Sensorpixeln (2a) von genau einem Farbfilter (6) überdeckt ist;
umfassend die Verfahrensschritte:

   Positionierung und räumliche Ausrichtung einer virtuellen Kamera in einer dreidimensionalen virtuellen Umwelt auf einem Computersystem;
   Simulation einer Abbildung von farbigem Licht auf Sensorpixel eines in der virtuellen Kamera verbauten Mosaikfiltersensors (2) durch eine Kameraoptik (8), wobei für das auf jeden Sensorpixel abgebildete Licht in Abhängigkeit von der Position und der räumlichen Ausrichtung der virtuellen Kamera eine Helligkeit und ein Farbwert aus einem nativen Farbraum der virtuellen Umwelt definiert ist;
   Erzeugung der synthetischen Bilddaten mittels einer Simulation des in der virtuellen Kamera verbauten Mosaikfiltersensors (2) durch Herleitung von Pixelhelligkeiten der Sensorpixel in Abhängigkeit von der Helligkeit und dem Farbwert des auf den jeweiligen Sensorpixel abgebildeten Lichts (4);

**gekennzeichnet durch** eine Erstellung einer der jeweiligen Filterfarbe zugeordneten Abbildungstabelle (20) für jede in dem Mosaikfilter (2b) vorkommende Filterfarbe, sodass jeder Filterfarbe zumindest eine Abbildungstabelle und jeder Abbildungstabelle genau eine Filterfarbe zugeordnet ist;
eine Ausgestaltung der Abbildungstabellen (20) derart, dass in jeder Abbildungstabelle (20) einer Vielzahl von Farbwerten aus einer Rasterabtastung des nativen Farbraums der virtuellen Umwelt jeweils ein Pixelhelligkeitsmaß (P1, P2, P3) zugeordnet ist, aus dem eine Pixelhelligkeit eines Sensorpixels, der mit einem Farbfilter (6) der zugeordneten Filterfarbe überdeckt ist und mit Licht des jeweiligen Farbwertes belichtet wird, herleitbar ist;
eine Überprüfung, für die Sensorpixel des simulierten Mosaikfiltersensors (2b), der Filterfarbe des den jeweiligen Sensorpixel überdeckenden Farbfilters (6), und eine Konsultierung der der jeweiligen Filterfarbe zugeordneten Abbildungstabelle (20); und
eine Herleitung der Pixelhelligkeit des jeweiligen Sensorpixels in Abhängigkeit von dem Farbwert des auf den jeweiligen Sensorpixel abgebildeten Lichts mittels Auslesung des dem jeweiligen Farbwert zugeordneten Pixelhelligkeitsmaßes (P1, P2, P3) aus der jeweils konsultierten Abbildungstabelle (20).

2. Verfahren gemäß Anspruch 1, in dem das der Rasterabtastung zugrundeliegende Raster als ein regelmäßiges Gitter von Farbwerten in dem nativen Farbraum ausgestaltet ist.

3. Verfahren gemäß Anspruch 1 oder 2, in dem bei der Herleitung der Pixelhelligkeit eine Lichtmenge, insbesondere eine Lichtintensität und eine Belichtungszeit, des auf den jeweiligen Sensorpixel abgebildeten Lichts berücksichtigt wird.

4. Verfahren gemäß einem der vorhergehenden Ansprüche, in dem die Erstellung der Abbildungstabellen (20) folgende Verfahrensschritte umfasst:

   eine Erzeugung jeweils einer physischen Repräsentation einer Mehrzahl von Farbwerten des nativen Farbraums in Form einer mit einer Kamera erfassbaren elektromagnetischen Welle (4);
   Erfassung jeder physischen Repräsentation (4) aus der Mehrzahl von physischen Repräsentationen (4) mit einer physischen Kamera (16), in der ein Mosaikfiltersensor (2) verbaut ist;
   Ausmessung der von jedem Farbkanal des Mosaikfiltersensors (2) erzeugten Rohdaten (U) infolge der Erfassung der jeweiligen physischen Repräsentation (4) jedes Farbwerts, wobei jeder Farbkanal einer auf dem Mosaikfilter (2b) vorkommenden Filterfarbe entspricht;

Erstellung der Abbildungstabellen (20) auf Basis der bei der Ausmessung ermittelten Messwerte (U1, U2, U3), sodass die in den Abbildungstabellen (20) hinterlegten Pixelhelligkeitsmaße (P1, P2, P3) die Sensorpixelantworten des in der physischen Kamera verbauten Mosaikfiltersensors repräsentieren.

5. Verfahren gemäß Anspruch 4, in dem zur Erzeugung der elektromagnetischen Welle (4) mindestens eine, insbesondere zur Kalibrierung einer Kamera ausgestaltete, Farbkarte (12) ausgeleuchtet wird.

6. Verfahren gemäß Anspruch 5, in dem die auf der mindestens einen Farbkarte (12) dargestellten Farbwerte eine Rasterabtastung des nativen Farbraums ausbilden.

7. Verfahren gemäß Anspruch 5 oder 6, in dem die Erstellung der Abbildungstabellen (20) eine Ergänzung der anhand der auf der Farbkarte (12) abgebildeten Farbwerte gewonnenen Messwerte (U1, U2, U3) oder Pixelhelligkeitsmaße (P1, P2, P3) durch ein Abschätzungsverfahren umfasst, insbesondere durch Interpolation oder Extrapolation.

8. Verfahren gemäß einem der Ansprüche 5 bis 7, mit den Verfahrensschritten:

Erfassung einer durch die Strahlungsverteilungskurven der Ausleuchtung der Farbkarte (12) definierten Lichtart;

Zuordnung der Abbildungstabellen (20) zu der Lichtart; und

Erzeugung synthetischer Bilddaten zur Imitation von Kamerarohdaten (U) von dem physischen Mosaikfiltersensor (2) unter der Annahme, dass die physische Kamera (16) in einer Umwelt angeordnet ist, die entsprechend der Lichtart ausgeleuchtet ist;

wobei die Lichtart insbesondere eine Normlichtart ist und/oder ausgestaltet ist, eine in der physischen Welt vorkommende typische Lichtart nachzubilden.

9. Verfahren gemäß einem der Ansprüche 1 bis 3, in dem zur Erstellung der jeweiligen Abbildungstabelle (20) das Pixelhelligkeitsmaß (P1, P2, P3) für jeden Farbwert unter Berücksichtigung eines Transmissionsspektrums des jeweiligen Farbfilters (6) und einer Quanteneffizienz des Sensorpixels berechnet wird.

10. Verfahren gemäß Anspruch 9, in dem die Pixelhelligkeiten (U) unter Berücksichtigung einer Lichtart, definiert durch Strahlungsverteilungskurven des eine Umwelt der physischen Kamera (16) ausleuchtenden Lichts, berechnet werden;

mit den Verfahrensschritten:

Zuordnung der Abbildungstabellen (20) zu der Lichtart; und

Erzeugung synthetischer Bilddaten zur Imitation von Kamerarohdaten (U) von dem physischen Mosaikfiltersensor (2) unter der Annahme, dass die physische Kamera (16) in einer Umwelt angeordnet ist, die entsprechend der Lichtart ausgeleuchtet ist;

wobei die Lichtart insbesondere eine Normlichtart ist und/oder ausgestaltet ist, eine in der physischen Welt vorkommende typische Lichtart nachzubilden.

11. Verfahren nach einem der vorhergehenden Ansprüche, in dem die Pixelhelligkeiten (U1, U2, U3) von den simulierten Sensorpixeln erzeugte simulierte elektrische Spannungen und/oder simulierte elektrische Ströme und/oder simulierte elektrische Ladungen repräsentieren

und die synthetischen Bilddaten aus der Gesamtheit der simulierten elektrischen Spannungen und/oder elektrischen Ströme und/oder elektrischen Ladungen erzeugt werden.

12. Computerprogrammprodukt zur Erzeugung synthetischer Bilddaten zur Imitation von Kamerarohdaten (U) von einem Mosaikfiltersensor (2), beispielsweise einem Bayer-Sensor, der Mosaikfiltersensor (2) umfassend eine Anordnung von Sensorpixeln (2a) und weiterhin umfassend einen Mosaikfilter (2b), beispielsweise einen Bayer-Filter, ausgestaltet als ein periodisches Mosaik von Farbfiltern (6) unterschiedlicher Farbe, die derart angeordnet sind, dass jeder Sensorpixel aus der Anordnung von Sensorpixeln (2a) von genau einem Farbfilter (6) überdeckt ist;

das Computerprogrammprodukt umfassend:

Mittel zur Positionierung und Ausrichtung einer virtuellen Kamera in einer dreidimensionalen virtuellen Umwelt auf einem Computersystem;

Mittel zur Simulation einer Abbildung von farbigem Licht (4) auf Sensorpixel eines in der virtuellen Kamera verbauten Mosaikfiltersensors (2) durch eine in der virtuellen Kamera verbaute Kameraoptik (8), wobei für das auf jeden Sensorpixel abgebildete Licht (4) in Abhängigkeit von der Position und der räumlichen Ausrichtung der virtuellen Kamera eine Helligkeit und ein Farbwert aus einem nativen Farbraum der virtuellen Umwelt definiert ist;

Mittel zur Erzeugung der synthetischen Bilddaten mittels einer Simulation des in der virtuellen Kamera verbauten Mosaikfiltersensors (2) durch Herleitung von Pixelhelligkeiten der Sensorpixel in Abhängigkeit von der Helligkeit und dem Farbwert des auf den jeweiligen Sensorpixel abgebildeten Lichts;

**dadurch gekennzeichnet, dass** das Computerprogrammprodukt für jede in dem Mosaikfilter (2b) vorkommende Filterfarbe eine Abbildungstabelle (20) vorhält, sodass jeder Filterfarbe zumindest eine Abbildungstabelle und jeder Abbildungstabelle genau eine Filterfarbe zugeordnet ist;

die Abbildungstabellen (20) derart ausgestaltet sind, dass in jeder Abbildungstabelle (20) einer Vielzahl von Farbwerten aus einer Rasterabtastung des nativen Farbraums der virtuellen Umwelt jeweils ein Pixelhelligkeitsmaß (P1, P2, P3) zugeordnet ist, aus dem eine Pixelhelligkeit (U1, U2, U3) eines Sensorpixels, der mit einem Farbfilter (6) der zugeordneten Filterfarbe überdeckt ist und mit Licht (4) des jeweiligen Farbwertes belichtet wird, herleitbar ist;

das Computerprogrammprodukt eingerichtet ist, zur Erzeugung der synthetischen Bilddaten für die Sensorpixel des simulierten Mosaikfiltersensors (2) jeweils eine Überprüfung der Filterfarbe des den jeweiligen Sensorpixel überdeckenden Farbfilters (6) vorzunehmen,

die der jeweiligen Filterfarbe zugeordnete Abbildungstabelle (20) zu konsultieren, und

mittels Auslesung des dem jeweiligen Farbwert zugeordneten Pixelhelligkeitsmaßes (P1, P2, P3) die Pixelhelligkeit des jeweiligen Sensorpixels in Abhängigkeit von dem Farbwert des auf den Sensorpixel abgebildeten Lichts herzuleiten.

13. Computerprogrammprodukt gemäß Anspruch 12, das ausgestaltet ist, bei der Herleitung der Pixelhelligkeit eine Lichtmenge, insbesondere eine Lichtintensität und eine Belichtungszeit, des auf den jeweiligen Sensorpixel abgebildeten Lichts zu berücksichtigen.

14. Computerprogrammprodukt gemäß Anspruch 12 oder 13, dessen Abbildungstabellen (20) jeweils einer durch Strahlungsverteilungskurven definierten Lichtart zugeordnet sind, insbesondere einer Normlichtart und/oder einer Nachbildung einer in der physischen Welt vorkommenden typischen Lichtart, und ausgestaltet sind, synthetische Bilddaten zur Imitation von Kamerarohdaten von dem physischen Mosaikfiltersensor unter der Annahme zu erzeugen, dass die physische Kamera in einer Umwelt angeordnet ist, die entsprechend der Lichtart ausgeleuchtet ist.

15. Computerprogrammprodukt gemäß einem der Ansprüche 12 bis 14, dessen Abbildungstabellen durch die Pixelhelligkeitsmaße ausgestaltet sind, Transmissionsspektren des jeweils zugeordneten Farbfilters und eine Quanteneffizienz eines Sensorpixels zu berücksichtigen.

Fig. 1

*Fig. 2*

Berechne Belichtung des Mosaikfiltersensors 2 — 22

Allokiere Matrix für synthetische Bilddaten — 24

Springe zum ersten Sensorpixel — 26

Lies sRGB-Farbwert und Helligkeit der Belichtung des Sensorpixels ein — 28

Ermittle Filterfarbe des Sensorpixels — 30

Kosultiere der Filterfarbe zugeordnete Abbildungstabelle 20 — 32

Lies das dem sRGB-Farbwert zugeordnete Pixelhelligkeitsmaß aus — 34

Berechne elektrische Antwort des Sensorpixels — 36

Schreibe elektrische Antwort in Matrix für synthetische Bilddaten — 38

Spring zum nächsten Sensorpixel

nein

Alle Sensorpixel abgearbeitet?

ja

Gib Matrix mit den synthetischen Bilddaten frei

Fig. 3

Europäisches
Patentamt

European
Patent Office

Office européen
des brevets

## EUROPÄISCHER RECHERCHENBERICHT

Nummer der Anmeldung

EP 25 15 9861

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/294279 A1 (PIATEK MARCIN [PL] ET AL) 17. September 2020 (2020-09-17) * Absatz [0080] - Absatz [0104]; Abbildungen 1-4 * ----- | 1-15 | INV. H04N23/85 G06T15/00 G06T15/50 H04N1/60 |
| X | ZHENYI LIU ET AL: "ISETHDR: A Physics-based Synthetic Radiance Dataset for High Dynamic Range Driving Scenes", ARXIV.ORG, CORNELL UNIVERSITY LIBRARY, 201 OLIN LIBRARY CORNELL UNIVERSITY ITHACA, NY 14853, 22. August 2024 (2024-08-22), XP091858451, * Sections 3.1. HDR scene simulation, 3.2. Image system simulation, 4.2. RGBW Sensor; Seite 3 - Seite 8 * ----- | 1-15 | |

**RECHERCHIERTE SACHGEBIETE (IPC)**

H04N
G06T

Der vorliegende Recherchenbericht wurde für alle Patentansprüche erstellt

| Recherchenort | Abschlußdatum der Recherche | Prüfer |
|---|---|---|
| München | 9. Juli 2025 | Seytter, Fritz |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**09-07-2025**

| Im Recherchenbericht angeführtes Patentdokument | Datum der Veröffentlichung | Mitglied(er) der Patentfamilie | | Datum der Veröffentlichung |
|---|---|---|---|---|
| US 2020294279 A1 | 17-09-2020 | CN | 111698486 A | 22-09-2020 |
| | | EP | 3709623 A1 | 16-09-2020 |
| | | US | 2020294279 A1 | 17-09-2020 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **RENÉ MOLENAAR et al.** Full Spectrum Camera Simulation for Reliable Virtual Developments and Validation of ADAS and Automated Driving Applications. *IEEE Intelligent Vehicles Symposium*, 2015, vol. IV

- **JOYCE FARREL** ; **PETER B. CATRYSSE** ; **BREAN WANDELL**. Digital camera simulation. *Applied Optics*, 2012, vol. 51 (4)